# EUROPÄISCHE PATENTSCHRIFT

(11) **EP 2 667 746 B1**
(45) Veröffentlichungstag und Bekanntmachung des Hinweises auf die Patenterteilung: **24.12.2014**
(21) Anmeldenummer: 12702955.1
(22) Anmeldetag: 12.01.2012
(51) Int. Cl.: A47B 88/04, A47B 88/10, E05D 15/46

(54) **MÖBELTEIL MIT EINER DREHMOMENTÜBERTRAGENDEN WELLE**
FURNITURE PART COMPRISING A TORQUE-TRANSMITTING SHAFT
ÉLÉMENT DE MEUBLE ÉQUIPÉ D'UN ARBRE DE TRANSMISSION DE COUPLE

(30) Priorität: 28.01.2011 AT 1242011; 20.05.2011 AT 7292011
(43) Veröffentlichungstag der Anmeldung: 04.12.2013
(73) Patentinhaber: Julius Blum GmbH, 6973 Höchst (AT)
(72) Erfinder: BOHLE, Wolfgang, A-6840 Götzis (AT)
(74) Vertreter: Gangl, Markus
(86) Internationale Anmeldenummer: PCT/AT2012/000007
(87) Internationale Veröffentlichungsnummer: WO 2013/036976

(56) Entgegenhaltungen:
- WO-A1-2011/047396
- AT-A4- 507 656

## Beschreibung

Die Erfindung betrifft ein bewegbar gelagertes Möbelteil mit einer drehmomentübertragenden Welle, insbesondere Synchronisationsstange, wobei die Welle mindestens zwei Teilwellen aufweist, wobei eine Teilwelle als ein stangenförmiges Bauteil ausgebildet ist und die zweite Teilwelle als ein Verbindungsteil ausgebildet ist, und einer Verbindungseinrichtung für das stangenförmige Bauteil mit dem Verbindungsteil - insbesondere mit wenigstens einer Feder, die das stangenförmige Bauteil mit dem Verbindungsteil federnd zusammenhält.

Im Weiteren bezieht sich die Erfindung auf ein Möbel mit mindestens einem bewegbaren Möbelteil.

Derartige Möbelteile gehören in einer Vielzahl zum Stand der Technik. So finden sie etwa bei Schubladen Anwendung, die über der Seitenwand eine Verbindungseinrichtung für eine Reling aufweisen, um das Ladegut im Innenraum der Schublade zu stabilisieren.

Ein weiteres Einsatzgebiet derartiger Möbelteile kommt etwa bei verfahrbaren Schubladen zum Einsatz. So zeigt etwa die AT 410 162 B vom 17. März 1999 der Julius Blum GmbH eine Verbindungseinrichtung für Möbelteile. Bei dieser Vorrichtung zur Stabilisierung des Laufverhaltens einer an einem Möbelkorpus verfahrbaren Schublade ist das stangenförmige Bauteil als Synchronisationsstange ausgebildet, die eine linke und eine rechte Ausziehschiene bei deren Ein- bzw. Ausfahrbewegung zueinander synchronisiert. Dabei wird über die Synchronisationsstange ein Drehmoment von einer Seite auf die andere Seite übertragen.

Eine ähnliche Vorrichtung ist aus AT 507 656 A4 bekannt.

Eine weitere Anwendung für derartige Möbelteile ist auch bei Klappen von Möbeln bekannt. So zeigt etwa die EP 1 875 026 B1 vom 14. April 2006 ein Möbel mit Seitenwänden, an denen jeweils eine Stellvorrichtung zum Bewegen der Klappe angeordnet ist, wobei die Stellvorrichtungen durch eine Synchronisationsstange (stangenförmiges Bauteil) zur synchronen Bewegung der Stellvorrichtungen verbunden sind, wobei die Synchronisationsstange an zumindest einem Endbereich eine Befestigungsvorrichtung (entspricht der Verbindungseinrichtung) zum lösbaren Verbinden der Synchronisationsstange mit einem drehbaren Teil der Stellvorrichtung aufweist.

Aufgabe der Erfindung ist es, ein gegenüber dem Stande der Technik verbessertes bewegbar gelagertes Möbelteil mit einer drehmomentübertragenden Welle und einer Verbindungseinrichtung für das stangenförmige Bauteil mit dem Verbindungsteil anzugeben.

Diese Aufgabe wird durch die Merkmale des Anspruches 1 gelöst.

Durch die Verwendung eines Arretierteils kann verhindert werden, dass sich das Verbindungsteil vom stangenförmigen Bauteil selbsttätig löst, was oftmals beim Transport dieser bereits in der Fertigung zusammengebauten Teile passiert.

Ohne den Arretierteil kann es zum ungewollten Aushängen des stangenförmigen Bauteils kommen, da diese durch ihr Eigengewicht und die Massenträgheit nach unten absacken kann und sich so vom Verbindungsteil loslösen kann. Der Arretierteil kann dieses unbeabsichtigte Aushängen des stangenförmigen Bauteils während des Transportes und auch sonst verhindern, er fungiert somit unter anderem als Transportsicherung.

Nach erfolgter Montage des Möbels an seinem Aufstellungsort kann der Arretierteil an seinem Montageort verweilen, da er die Funktion des stangenförmigen Bauteils zusammen mit dem Verbindungsteil nicht behindert.

Ebenso ist es natürlich vorstellbar, dass man einen montierbaren Arretierteil wieder entfernt, um ihn mehrfach zu verwenden, da nach erfolgter Aufstellung des Möbels die Funktion des Arretierteiles unter Umständen nicht mehr benötigt wird.

Weitere vorteilhafte Ausführungsformen der Erfindung sind in den abhängigen Ansprüchen definiert.

Als besonders vorteilhaft hat es sich herausgestellt, wenn der Verbindungsteil als Zapfen ausgebildet ist, der in eine Aufnahme des stangenförmigen Bauteils eindringt.

Durch eine derartige Ausbildung ist eine formschlüssige Verbindung erzielbar, was zu einer stabilen Konstruktion beitragen kann.

Gemäß einem bevorzugten Ausführungsbeispiel kann vorgesehen sein, dass der Verbindungsteil als Aufnahme ausgebildet ist, in die das stangenförmige Bauteil eindringt. Dies kann ebenso zu einer stabilen Konstruktion beitragen.

Weiters kann bevorzugt vorgesehen sein, dass das stangenförmige Bauteil eine Synchronisationsstange für eine Schublade ist, wobei die Synchronisationsstange links und rechts ein Zahnrad oder eine Rolle antreibt die eine Ausfahrbewegung einer linken und rechten Ausziehschiene synchronisiert. Somit kann ein Drehmoment von einer Seite der Ausziehschiene auf die andere Seite übertragen werden, was zu einer gleichmäßigen Ausfahr- bzw. Einfahrbewegung einer Schublade beitragen kann.

Als besonders vorteilhaft hat es sich erwiesen, wenn das stangenförmige Bauteil eine Synchronisationsstange für eine Möbelklappe ist, die eine Schwenkbewegung eines linken und eines rechten Stellarmes zum Antrieb der Möbelklappe synchronisiert. Somit kann ein Verwinden der Möbelklappe vermieden werden.

Besonders bevorzugt kann vorgesehen sein, dass der Arretierteil einstückig ausgebildet ist. Durch die Verwendung eines einstückigen Arretierteils kann die Montage sehr rasch erfolgen, was die Kosten für die Arbeitszeit gering halten lässt.

Als besonders vorteilhaft hat es sich dabei herausgestellt, wenn der Arretierteil aus Kunststoff ausgebildet ist. Ein aus Kunststoff hergestelltes Arretierteil kann gut und günstig zum Beispiel mit einem Spritzgussverfahren hergestellt werden.

Gemäß einem bevorzugten Ausführungsbeispiel kann vorgesehen sein, dass der Arretierteil werkzeuglos montierbar und/oder werkzeuglos demontierbar ist. Das werkzeuglose Montieren bzw. Demontieren trägt auch dazu bei, dass die Montagezeiten gering sein können. Weiters kann dadurch der Arretierteil nicht nur bei einem einzelnen Möbel zum Einsatz kommen, sondern auch mehrfach wiederverwendet werden.

Als vorteilhaft hat es sich weiters herausgestellt, dass der Arretierteil clipartig ausgebildet ist. Durch eine clipartige Ausbildung kann der Arretierteil schnell und einfach aufgeschnappt werden, was ebenfalls die Montagezeit gering halten kann.

Als vorteilhaft hat es sich herausgesellt, wenn der Arretierteil radial sprengringartig auf den Verbindungsteil und/oder den stangenförmigen Bauteil aufschiebbar ausgebildet ist. Ein radiales sprengringartiges Aufschieben kann eine rasche Montage bewirken und kann weiters eine stabile Verbindung herstellen.

Gemäß einem möglichen Ausführungsbeispiel kann vorgesehen sein, dass der Verbindungsteil und das stangenförmige Bauteil zum Übertragen eines Drehmoments im Querschnitt eine von der Kreisform abweichende Kontur aufweisen. Durch das Übertragen eines Drehmoments kann ermöglicht werden, dass eine Synchronisation von der linken Seite des stangenförmigen Bauteils zur rechten Seite des stangenförmigen Bauteils erfolgen kann.

Als besonders vorteilhaft hat es sich herausgestellt, wenn der Arretierteil am stangenförmigen Bauteil und/oder am Verbindungsteil ausgebildet ist.

Gemäß einem bevorzugten Ausführungsbeispiel kann vorgesehen sein, dass der Arretierteil einstückig mit dem stangenförmigen Bauteil oder einstückig mit dem Verbindungsteil ausgebildet ist.

Weiters kann bevorzugt vorgesehen sein, dass der Arretierteil federnd am stangenförmigen Bauteil oder am Verbindungsteil ausgebildet ist.

Als besonders vorteilhaft hat es sich erwiesen, wenn der Arretierteil einen radial federnden Rastteil - vorzugsweise eine radial federnde Rastnase - aufweist, der in die Aufnahme des stangenförmigen Bauteils oder des Verbindungsteiles ragt.

Besonders bevorzugt kann vorgesehen sein, dass der radial federnde Rastteil - vorzugsweise die radial federnde Rastnase - werkzeuglos betätigbar ist.

Bevorzugt kann weiters vorgesehen sein, dass der Arretierteil nach erfolgter Montage am Verbindungsteil und/oder am stangenförmigen Bauteil in axialer Längsrichtung gegenüber dem Verbindungsteil und/oder dem stangenförmigen Bauteil verschiebbar oder dass der am Verbindungsteil oder am stangenförmigen Bauteil ausgebildete Arretierteil in axialer Längsrichtung gegenüber dem Verbindungsteil und/oder dem stangenförmigen Bauteil verschiebbar ist. Somit kann erzielt werden, dass das stangenförmige Bauteil auch noch nach erfolgter Montage des Arretierteiles bzw. nach erfolgter Arretierung relativ zum Verbindungsteil verschoben werden kann.

Schutz wird auch begehrt für ein bewegbares Möbelteil mit mindestens einer Verbindungseinrichtung nach einem der Ansprüche 1 bis 12, durch welche der Arretierteil das stangenförmige Bauteil und den Verbindungsteil gegen Lösen sichert.

Dabei kann für ein bewegbares Möbelteil des weiteren vorgesehen sein, dass die Verbindungseinrichtung ein stangenförmiges Bauteil und zwei Verbindungsteile aufweist, wobei das im Wesentlichen stangenförmige Bauteil zwischen den beiden Verbindungsteilen durch zwei Arretierteile gegen Lösen sichert.

Als besonders bevorzugt kann vorgesehen sein, dass das bewegbare Möbelteil als Schublade oder als Möbelklappe ausgebildet ist.

Konkret wird auch Schutz begehrt für ein Möbel mit mindestens einem bewegbaren Möbelteil nach wenigstens einer der beschriebenen Ausführungsformen.

Weitere Einzelheiten und Vorteile der vorliegenden Erfindung werden anhand der Figurenbeschreibung unter Bezugnahme auf die in der Zeichnung dargestellten Ausführungsbeispiele im Folgen näher erläutert. Darin zeigen:
- Fig. 1a: eine perspektivische Rückansicht einer rechten Ausziehführung mit darauf angeordneter Verbindungseinrichtung in Explosionsdarstellung,
- Fig. 1b: eine Detailansicht der Fig. 1a,
- Fig. 2a: eine perspektivische Rückansicht der in Fig. 1a dargestellten Verbindungseinrichtung im zusammengebauten Zustand,
- Fig. 2b: eine Detailansicht der Fig. 2a
- Fig. 3a: eine Rückansicht zweier Ausziehschienen, mit einer Synchronisationsstange und zwei Verbindungseinrichtungen, wobei eine Seite der Synchronisationsstange mit dem Verbindungsteil verbunden ist und die zweite Seite noch nicht, in Schnittdarstellung,
- Fig. 3b und 3c: Detailansichten der Fig. 3a,
- Fig. 4a: eine Rückansicht wie in Fig. 3a, mit zwei hergestellten Verbindungen der Synchronisationsstange mit den Verbindungsteilen, in Schnittdarstellung,
- Fig. 4b und 4c: Detailansichten der Fig. 4a,
- Fig. 5a: eine Rückansicht wie in Fig. 3a und 4a, mit zwei montierten Arretierteilen, in Schnittdarstellung,
- Fig. 5b und 5c: Detailansichten der Fig. 5a,
- Fig. 5d: eine Draufsicht auf eine Verbindungseinrichtung ohne Federn mit Arretierteil
- Fig. 5e: eine Schnittdarstellung der Fig. 5d
- Fig. 6a: eine Rückansicht zweier Ausziehschienen, mit einer Synchronisationsstange und zwei Verbindungseinrichtungen, wobei eine Seite der Synchronisationsstange mit dem Verbindungsteil verbunden ist und die zweite Seite noch nicht, in perspektivischer Darstellung,
- Fig. 6b und 6c: Detaildarstellungen der Fig. 6a,
- Fig. 7a: eine Rückansicht, wie in Fig. 6a dargestellt mit beidseitig hergestellter Verbindung der Synchronisationsstange mit den Verbindungsteilen,
- Fig. 7b und 7c: Detailansichten der Fig. 7a,
- Fig. 8a: eine Rückansicht einer Schublade auf zwei Ausziehschienen mit einer Synchronisationsvorrichtung für die beiden Ausziehschienen mit montierten Arretierteilen bei den Verbindungseinrichtungen,
- Fig. 8b und 8c: Detailansichten der Fig. 8a,
- Fig. 9a: ein Möbel mit einem Möbelkorpus, Schubladen und Ausziehschienen und einer Synchronisationsvorrichtung mit zwei Verbindungseinrichtungen,
- Fig. 9b: ein Möbel mit einem Möbelkorpus und einer Möbelklappe mit einer Synchronisationsvorrichtung für die Schwenkbewegung des linken und des rechten Stellarmes mit Verbindungseinrichtungen,
- Fig. 9c: ein Möbel mit einem Möbelkorpus und einer Schublade mit Reling,
- Fig. 10a: eine perspektivische Darstellung einer weiteren Verbindungseinrichtung mit einem federnden Rastteil als Arretierteil,
- Fig. 10b: eine Detailansicht der Fig. 10a,
- Fig. 10c: eine perspektivische Darstellung der weiteren Verbindungseinrichtung mit einem federnden Rastteil als Arretierteil,
- Fig. 10d: eine Detailansicht der Fig. 10c.

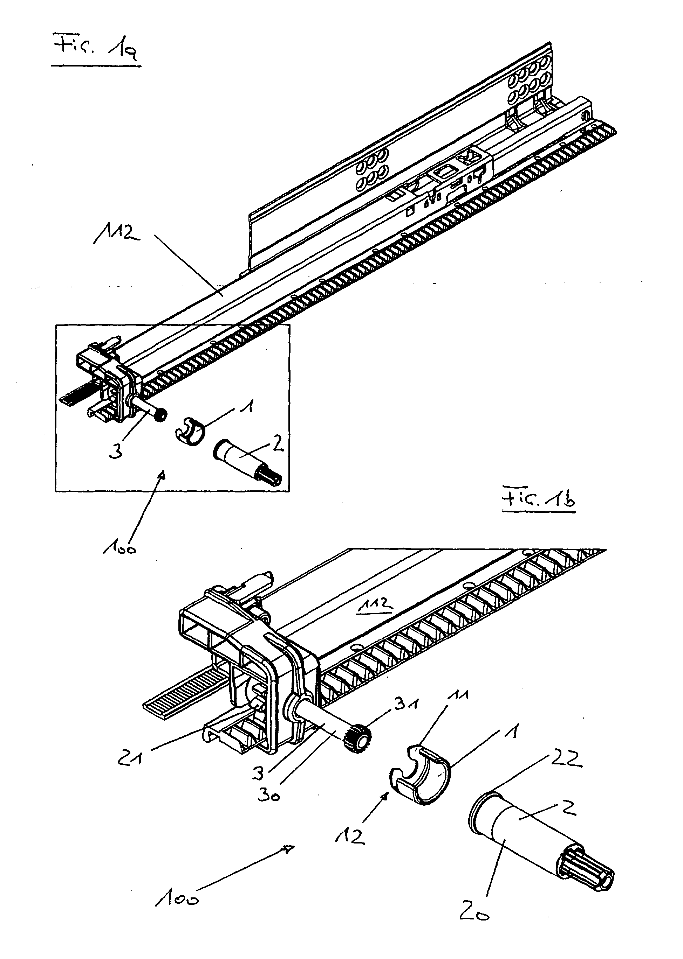

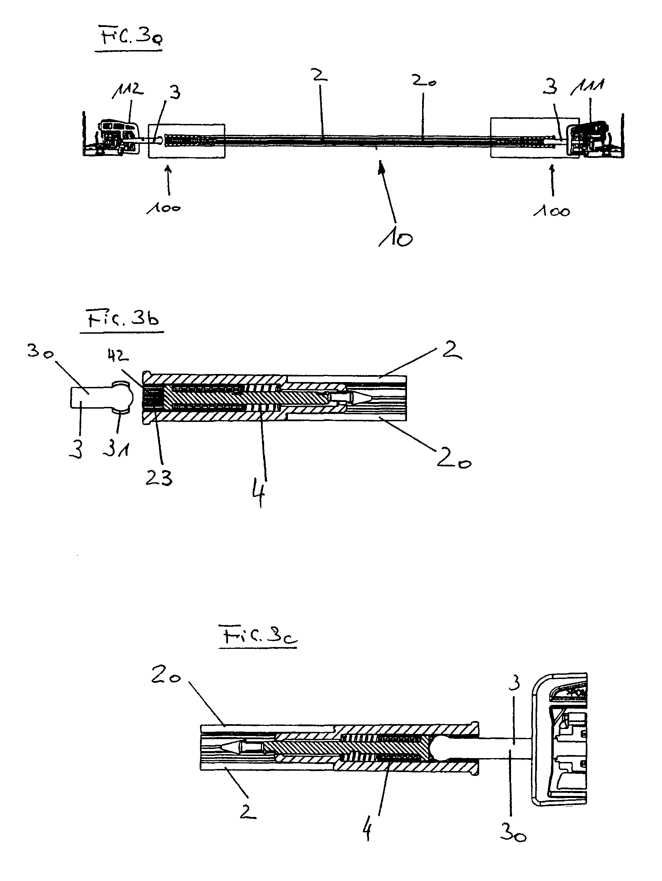

Figur 1 zeigt eine perspektivische Rückansicht einer Schienenausziehführung. Die Schienenausziehführung weist eine rechte Ausziehschiene 112 auf. Zur Synchronisation dieser rechten Ausziehschiene 112 mit einer linken Ausziehschiene 111 (siehe Figur 3a) weist die rechte Ausziehschiene 112 in ihrem hinteren Bereich eine Synchronisationsvorrichtung auf, um mit der linken Ausziehschiene 111 synchron aus- bzw. eingefahren zu werden. Die Synchronisationsvorrichtung wird dabei mittels der Verbindungseinrichtung 100 mit den Ausziehschienen 111 und 112 verbunden.

Diese in diesem bevorzugten Ausführungsbeispiel werkzeuglos herstellbare Verbindung besteht dabei hauptsächlich aus einem Verbindungsteil 3 und einem stangenförmigen Bauteil 2, welche über den Arretierteil 1 miteinander verbunden und gegen Lösen gesichert werden.

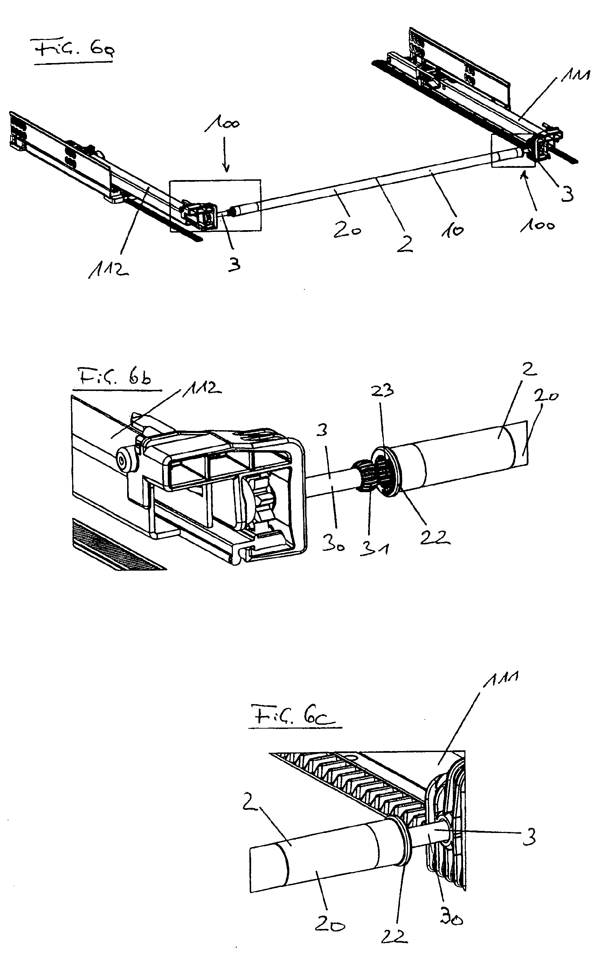

Figur 1b zeigt eine Detailansicht der Figur 1a mit der Verbindungseinrichtung 100 in Explosionsdarstellung. Die zu verbindenden Teile 2 und 3, in diesem bevorzugten Ausführungsbeispiel als Zapfen 30 und Synchronisationsstange 20 ausgebildet, werden nachdem sie ineinander gesteckt worden sind über den Arretierteil 1 zusammengehalten. Um ein Drehmoment übertragen zu können, weist der Zapfen 30 eine Verdickung an seinem Ende auf, welche als Zahnrad 31 ausgebildet ist. Dieses Zahnrad 31 greift in zusammengestecktem Zustand mit der Synchronisationsstange 20 in ein Innengewinde 23 (siehe Figur 6b) der Aufnahme 42 der Synchronisationsstange 20 ein. Damit sich der Zapfen 30 nicht mehr von der Synchronisationsstange 20 lösen kann, ist der Arretierteil 1 vorgesehen, welcher in diesem bevorzugten Ausführungsbeispiel sowohl einstückig als auch aus Kunststoff ausgebildet ist. Der Arretierteil 1 ist in diesem bevorzugten Ausführungsbeispiel clipartig ausgebildet und wird sprengringartig radial auf den Verbindungsteil - also dem Zapfen 30 - aufgeschoben und ebenso clipartig auf die Synchronisationsstange 20.

Nachdem der Arretierteil 1 am Zapfen 30 und an der Synchronisationsstange 20 angebracht wurde, kann sich die Synchronisationsstange 20 nicht mehr relativ zum Arretierteil 1 bewegen, da der Flansch 22 der Synchronisationsstange 20 in eine Ausnehmung 12 des Arretierteils 1 eingerastet ist.

Andererseits kann sich der Zapfen 30 sehr wohl noch relativ zum Arretierteil 1 und somit zur Synchronisationsstange 20 bewegen, da die sprengringartige Ausbildung 11 des Arretierteils 1 den Zapfen 30 zwar umgreift, jedoch auch weiterhin noch am Zapfen 30 verschoben werden kann. Dies unter anderem deshalb, weil die sprengringartige Ausbildung 11 des Arretierteils 1 die Verdickung 31 des Zapfen 30 nur hintergreift und somit zwar axial nicht mehr über die Verdickung 31 hinweg gezogen werden kann, sich jedoch von dieser sehr wohl axial wegbewegen kann.

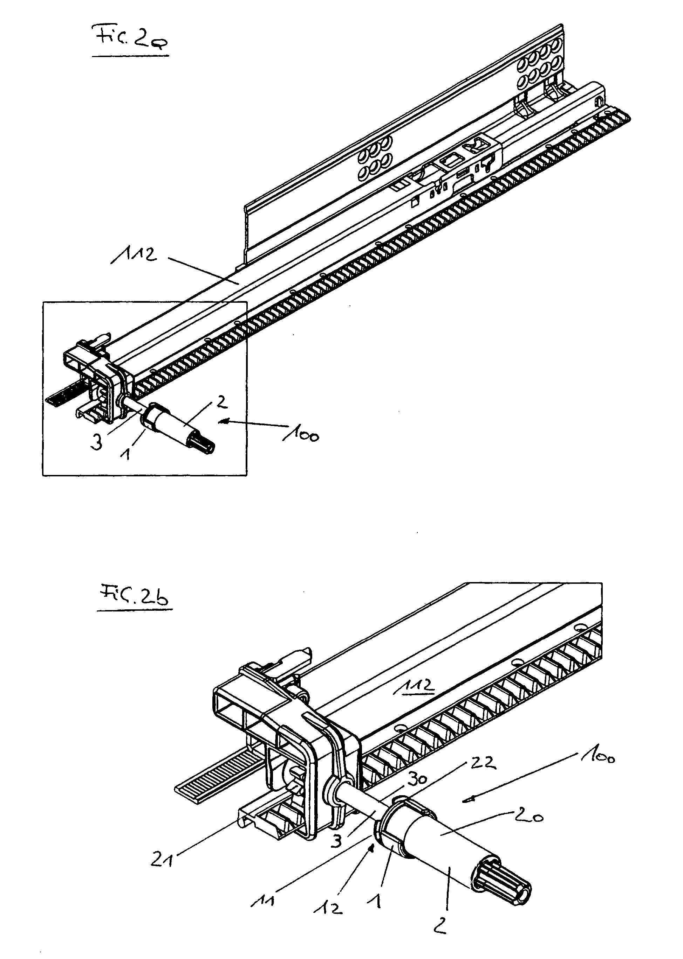

Figur 2a zeigt die Verbindungseinrichtung 100, wie in der Figur 1b dargestellt in zusammengebautem Zustand.

In der Figur 2b ist gut erkennbar, dass der Zapfen 30 im stangenförmigen Bauteil 2, in diesem bevorzugten Ausführungsbeispiel als Synchronisationsstange 20 ausgebildet, ruht. Damit sich diese beiden Teile 20 und 30 nicht mehr voneinander trennen können, ist der Arretierteil 1 über den Zapfen 30 und die Synchronisationsstange 20 aufgeclipt. Dabei ruht der Flansch 22 der Synchronisationsstange 20 in der Ausnehmung 12 des Arretierteils 1. Die sprengringartige Ausbildung 11 des Arretierteils 1 umklammert dabei den zapfenförmig 30 ausgebildeten Verbindungsteil 3.

Somit ist gewährleistet, dass - speziell im Transportfall - der stangenförmige Bauteil 2 sich nicht vom Verbindungsteil 3 lösen kann.

In den Figuren 3 bis 5 bzw. 6 bis 8 wird der bevorzugte Montagevorgang beschrieben.

Figur 3a zeigt eine Rückansicht einer Synchronisationsvorrichtung für zwei Ausziehschienen 111 und 112. Die Synchronisationsvorrichtung weist dabei die drehmomentübertragende Welle 10 auf, wobei die Welle 10 mindestens zwei Teilwellen aufweist, wobei eine Teilwelle als ein stangenförmiges Bauteil 2 ausgebildet ist und die zweite Teilwelle als ein Verbindungsteil 3 ausgebildet ist. Dabei wird das stangenförmige Bauteil 2, welches als Synchronisationsstange 20 ausgebildet ist, über zwei Verbindungseinrichtungen 100 mit der linken 111 und rechten Ausziehschiene 112 verbunden.

Im ersten Schritt (Figur 3c) wird die Synchronisationsstange 20 über den Verbindungsteil 3, welche in diesem bevorzugten Ausführungsbeispiel als Zapfen 30 ausgebildet ist, geschoben. Der Sacklochboden der Synchronisationsstange 20 ist in diesem bevorzugten Ausführungsbeispiel durch die Feder 4 federnd ausgebildet. Durch die Synchronisationsstange 20 wird die Feder 4 zusammengedrückt. Durch dieses Überlappen der Synchronisationsstange 20 mit dem Zapfen 30 ist auf der gegenüberliegenden Seite (siehe Figur 3b) auch ein Abstand zwischen der Synchronisationsstange 20 und dem Zapfen 30 entstanden, wodurch die Synchronisationsstange 20 auf dieser Seite eingesetzt werden kann. Auch auf dieser Seite verfügt - in diesem bevorzugten Ausführungsbeispiel - die Synchronisationsstange 20 über eine Feder 4. Dadurch wird es ermöglicht, dass die Montage in beliebiger Reihenfolge erfolgen kann.

Ebenso ist es natürlich vorstellbar, dass die Synchronisationsstange 20 nur über eine Feder 4 verfügt, die zum Beispiel in der Mitte der Synchronisationsstange 20 ausgebildet ist und von beiden Seiten der Synchronisationsstange 20 aus mit Kraft beaufschlagt werden kann.

In diesem bevorzugten Ausführungsbeispiel ist der Verbindungsteil 3, wie bereits erwähnt, als Zapfen 30 ausgebildet, es ist jedoch natürlich ebenso vorstellbar, dass der Verbindungsteil 3 als Aufnahme ausgebildet ist, in dem das stangenförmige Bauteil 2 - in diesem bevorzugten Ausführungsbeispiel als Synchronisationsstange 20 ausgebildet - eindringt.

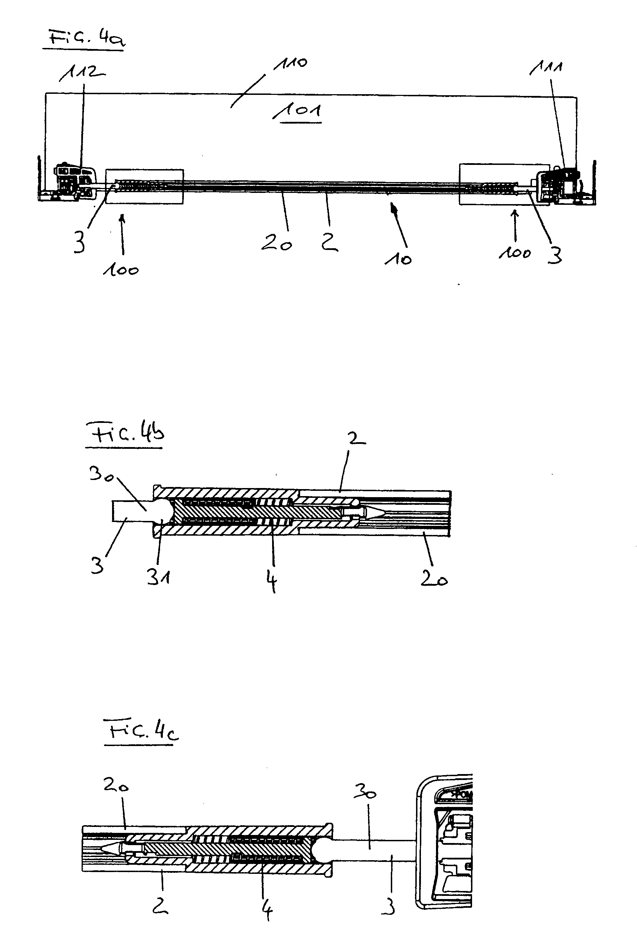

Figur 4a zeigt die Situation der drehmomentübertragenden Welle 10 mit ihrer bereits montierten Synchronisationsstange 20 an beiden Verbindungseinrichtungen 100 der linken und rechten Ausziehschiene 111 und 112 eines bewegbar gelagerten Möbelteils 110, in diesem Ausführungsbeispiel eine Schublade 101.

In den Detailansichten der Figuren 4b und 4c ist gut erkennbar, dass die Federn 4 entspannt sind und somit die Synchronisationsstange 20 auf den beiden Zapfen 30 ruht.

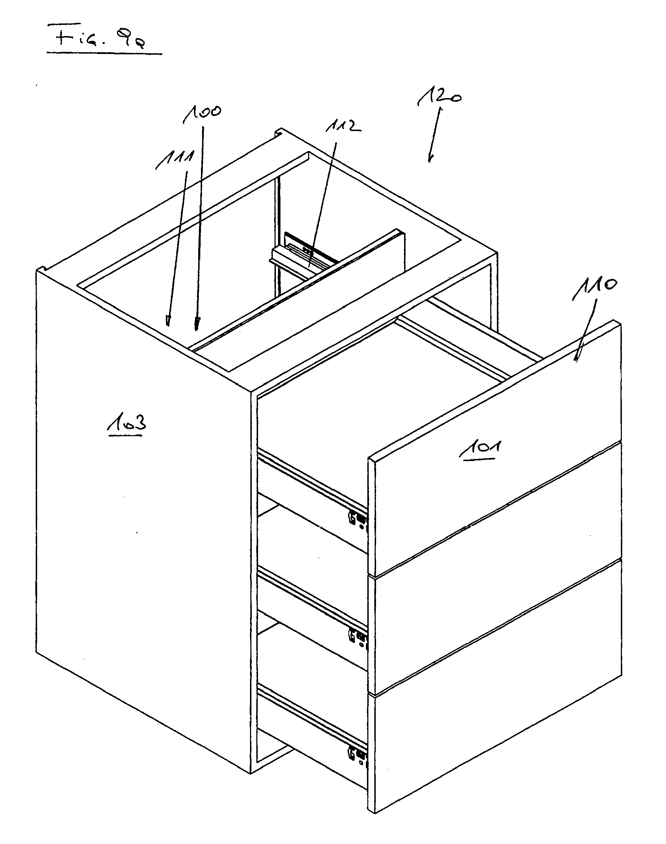

Speziell in dieser Situation kann nun der Fall eintreten, dass sich die Synchronisationsstange 20 vom Zapfen 30 löst. Dieser unerwünschte Fall tritt speziell dann auf, wenn man zum Beispiel - wie es öfter beim Transport vorkommt - das Möbel 120 (siehe Figuren 9a bis 9c) bzw. das Möbelteil 110 (siehe Figuren 9a bis 9c) um 90° kippt und somit das Eigengewicht der Synchronisationsstange 20 die Feder 4 belastet, wodurch am anderen Ende der Synchronisationsstange 20 diese sich vom Zapfen 30 lösen kann und herausfällt.

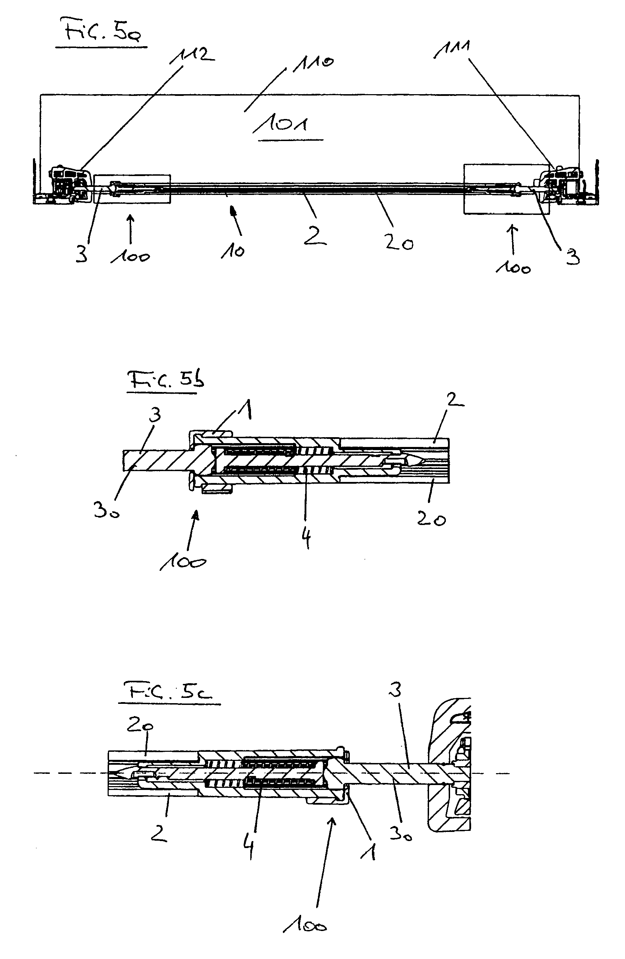

Durch das Anbringen des Arretierteiles 1 - wie in der Figur 5a bis 5e dargestellt - kann dies verhindert werden.

Wie aus den Detailansichten 5b, 5c, 5d und 5e erkennbar ist, verhindert der Arretierteil 1 ein Loslösen des stangenförmigen Bauteils 2 vom Verbindungsteil 3, da dieser Arretierteil 1 über den Zapfen 30 clipartig befestigt wurde und der Flansch 22 des stangenförmigen Bauteils 2, welches als Synchronisationsstange 20 ausgebildet ist, in eine Ausnehmung 12 (siehe auch Figur 1b und Figur 2) des Arretierteils 1 eingerastet ist.

Selbst nach erfolgter Montage des Arretierteils 1 ist das stangenförmige Bauteil 2 in axialer Längsrichtung gegenüber dem Verbindungsteil verschiebbar, das heißt dass in diesem bevorzugten Ausführungsbeispiel die Synchronisationsstange 20 nach erfolgter Montage des Arretierteils 1 in axialer Längsrichtung gegenüber dem Zapfen 30 verschiebbar ist.

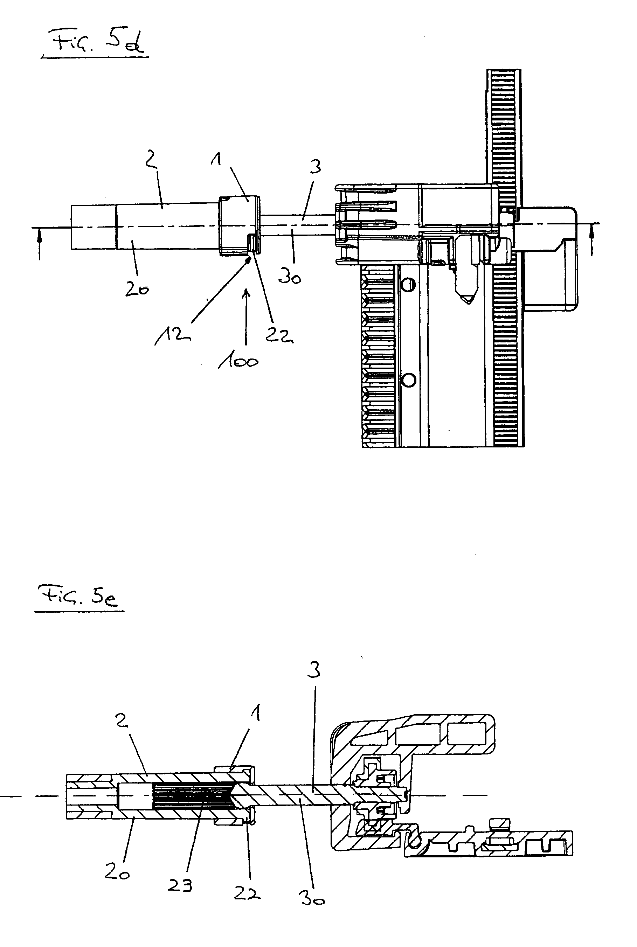

In den Figuren 5a bis 5c ist eine bevorzugte Ausführungsform mit der Verwendung von Federn 4 ausgeführt. Diese sind jedoch für die Funktion der Verbindungseinrichtung 100 nicht zwingend notwendig, wie die dargestellte Variante in den Figuren 5d und 5e zeigt, welche bevorzugter weise ohne Federn 4 ausgebildet ist. Bei bereits bestehenden Systemen, welche ohne Arretierteil hergestellt bzw. ausgeliefert wurden, kann dieser Arretierteil auch nachträglich nachgerüstet werden, was ein weiterer Vorteil der Erfindung ist.

In den Figuren 6 bis 8 ist in perspektivischer Ansicht dargestellt, was eben in den Figuren 3 bis 5 beschrieben wurde, nämlich der Vorgang des Zusammenbaus des stangenförmigen Bauteils 2 am Verbindungsteil 3 mit zu Hilfenahme eines Arretierteils 1.

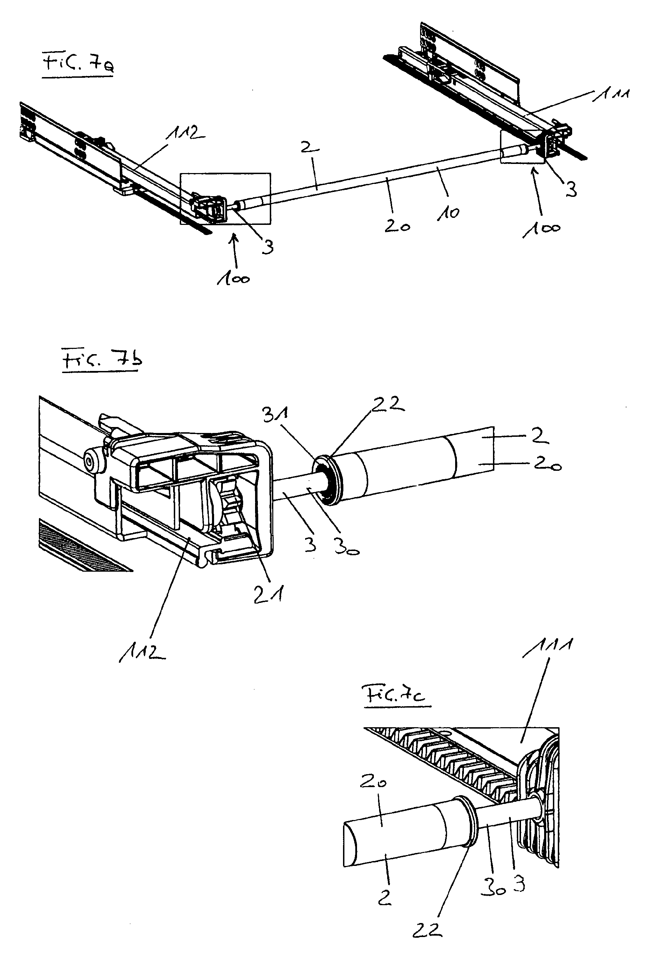

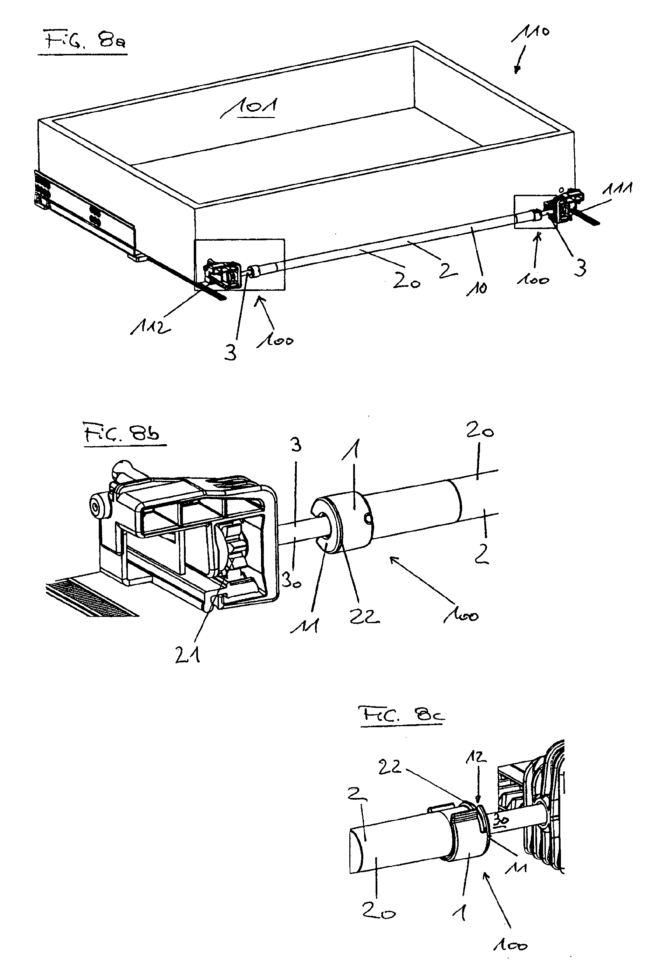

Dabei entsprechen die Figuren 6 den Figuren 3, die Figuren 7 den Figuren 4 und die Figuren 8 den Figuren 5, somit gilt alles unter den Figuren 3 bis 5 Erwähnte sinngemäß auch für diese Figuren 6 bis 8.

In Figur 6b ist gut erkennbar, dass der Zapfen 30 die Verdickung 31 aufweist, welche als Zahnrad ausgebildet ist, um ein Drehmoment auf das stangenförmige Bauteil 2, welches als Synchronisationsstange 20 ausgebildet ist, zu übertragen. Dazu weist die Synchronisationsstange 20 ein Innengewinde 23 in der Aufnahme 42 auf, welches mit dem Zahnrad 31 des Zapfens 30 korrespondiert. Hierbei müsste es sich natürlich nicht unbedingt um ein Zahnrad 31 und ein damit korrespondierendes Innengewinde 23 handeln, dies könnte natürlich ebenso jede andere im Querschnitt von der Kreisform abweichende Kontur sein, die das Verbindungsteil 3 und das stangenförmige Bauteil 2 aufweisen müssten, um ein Drehmoment übertragen zu können.

Figur 8a zeigt eine perspektivische Rückansicht des bewegbar gelagerten Möbelteils 110 - einer Schublade 101 - welche auf einer linken 111 und einer rechten Ausziehschiene 112 montiert ist. Das bewegbar gelagerte Möbelteil 110 weist dabei die drehmomentübertragende Welle 10 auf, wobei die Welle 10 mindestens zwei Teilwellen aufweist, wobei eine Teilwelle als das stangenförmige Bauteil 2 ausgebildet ist und die zweite Teilwelle als der Verbindungsteil 3 ausgebildet ist.

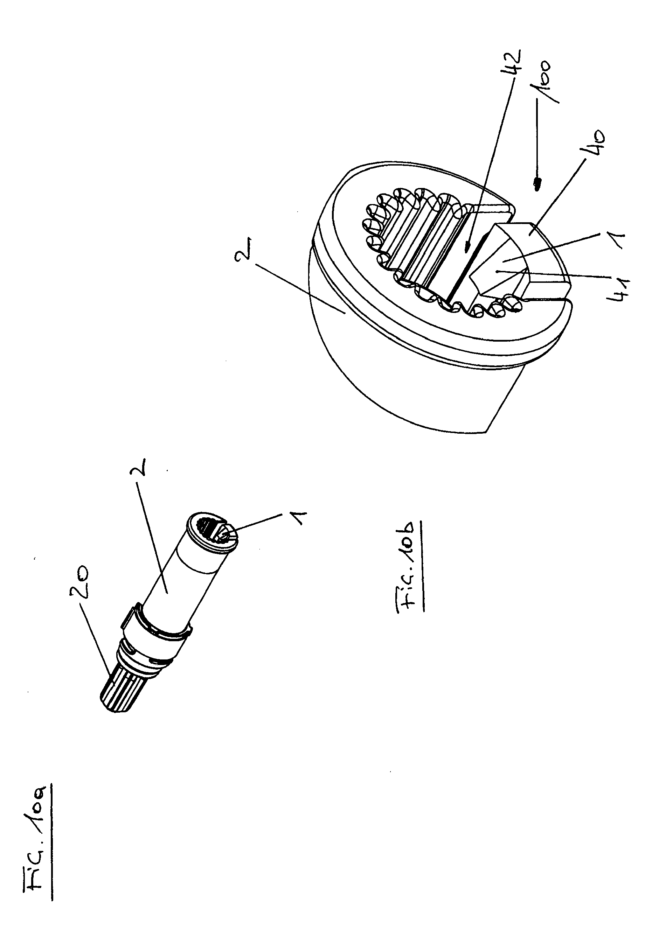

An der Schublade 101 ist dabei die Verbindungseinrichtung 100 für ein im Wesentlichen stangenförmiges Bauteil 2 mit einem Verbindungsteil 3 angeordnet, wobei das stangenförmige Bauteil 2 in diesem bevorzugten Ausführungsbeispiel eine Feder 4 (nicht dargestellt, siehe Figur 3b und 3c) aufweist, die das stangenförmige Bauteil 2 mit dem Verbindungsteil 3 federnd zusammenhält, wobei der Arretierteil 1 vorgesehen ist, der am stangenförmigen Bauteil 2 und am Verbindungsteil 3 montierbar ist und das stangenförmige Bauteil 2 und das Verbindungsteil 3 gegen Lösen sichert. Ebenso könnte es natürlich vorgesehen sein, dass der Arretierteil 1 am stangenförmigen Bauteil 2 oder am Verbindungsteil 3 ausgebildet ist und das stangenförmige Bauteil 2 und das Verbindungsteil 3 gegen Lösen sichert (siehe entsprechendes Ausführungsbeispiel bei den Figuren 10a bis 10d und deren Beschreibung).

In diesem Ausführungsbeispiel sind vorzugsweise zwei Arretierteile 1 vorgesehen, die auf beiden Seiten des stangenförmigen Bauteils 2 - welche als Synchronisationsstange 20 ausgebildet ist - angeordnet sind und ein Lösen der Verbindungsteile 3 vom stangenförmigen Bauteil 2 verhindern.

In diesem bevorzugten Ausführungsbeispiel wird diese Verbindungseinrichtung 100 bei einer Schublade eingesetzt. Ebenso ist es natürlich vorstellbar, dass man diese bei einer Möbelklappe einsetzt, um eine Schwenkbewegung eines linken und eines rechten Stellarmes zum Antrieb der Möbelklappe zu synchronisieren. Ein weiterer möglicher Anwendungsfall ist etwa bei einer Reling einer Schublade oder Ähnlichem.

In der Figur 8b ist erkennbar, dass das stangenförmige Bauteil 2 als Synchronisationsstange 20 für die Schublade 101 ausgebildet ist, wobei die Synchronisationsstange 20 links und rechts ein Zahnrad 21 antreibt, die eine Ein/ bzw. Ausfahrbewegung einer linken 111 und rechten Ausziehschiene 112 synchronisiert.

Nach erfolgter Montage und im Weiteren erfolgten Transport kann der Arretierteil 1 an der Verbindungseinrichtung 100 verbleiben, ebenso ist es aber natürlich auch vorstellbar, dass man den Arretierteil 1 wieder bevorzugter Weise werkzeuglos abnimmt und ihn für weitere Transportzwecke für die nächsten Schubladen oder ähnlichen Möbel verwendet.

Figur 9a zeigt ein Möbel 120 mit einem bewegbar gelagerten Möbelteil 110 - der Schublade 101 - welche in einem Möbelkorpus 103 angeordnet ist. Die Schublade 101 verfügt über eine linke und rechte Ausziehschiene 111 und 112, welche über eine Synchronisationsvorrichtung miteinander synchronisiert werden. An der Synchronisationsvorrichtung ist die Verbindungseinrichtung 100 (nicht sichtbar, siehe Figur 8a bis Figur 8c) ausgebildet, welche mittels der Arretierteile 1 das stangenförmige Bauteil 2 und das Verbindungsteil 3 gegen Lösen sichert.

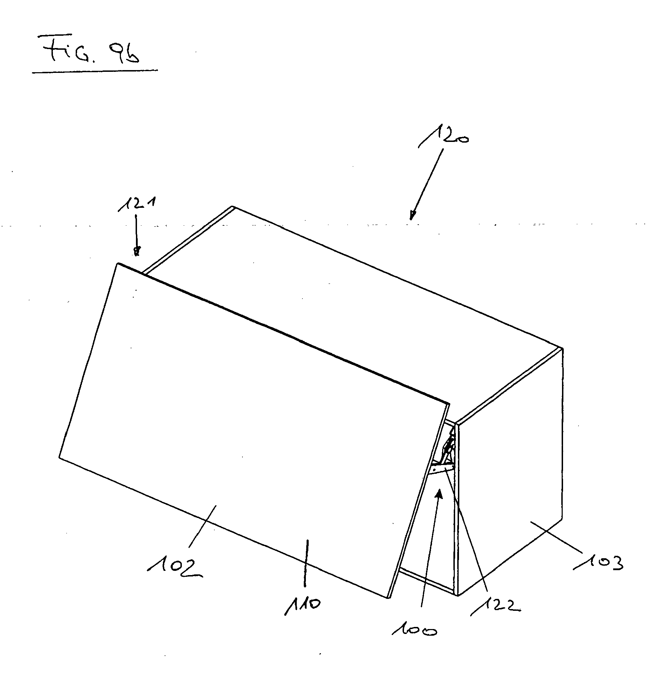

Figur 9b zeigt ein Möbel 120 mit einem Möbelkorpus 103 und einem bewegbar gelagerten Möbelteil 110 - einer Möbelklappe 102. Eine Schwenkbewegung des linken 121 (nicht sichtbar, von der Möbelklappe 102 verdeckt) und des rechten Stellarmes 122 wird über eine Synchronisationsvorrichtung synchronisiert, wobei diese Synchronisationsvorrichtung die Verbindungseinrichtung 100 (nicht sichtbar, von der Möbelklappe 102 verdeckt) aufweist, welche über den Arretierteil 1 das stangenförmige Bauteil 2 und das Verbindungsteil 3 gegen Lösen sichert.

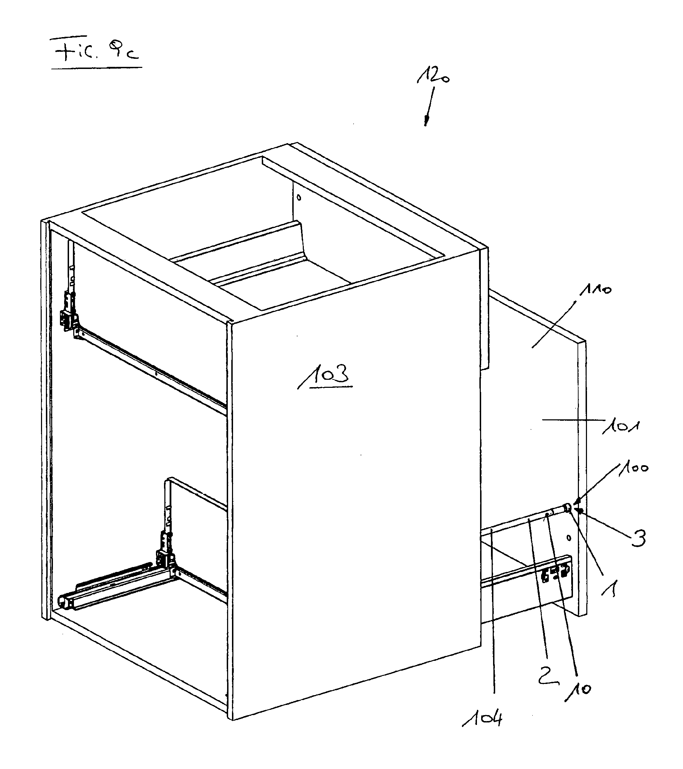

Figur 9c zeigt ein Möbel 120 mit einem Möbelkorpus 103 und einem bewegbar gelagerten Möbelteil 110 - der Schublade 101 - wobei die Schublade 101 über eine Reling 104 verfügt. Die Reling 104 ist in diesem bevorzugten Ausführungsbeispiel mit Hilfe der Verbindungseinrichtung 100 und dessen Arretierteils 1 derart in der Schublade 101 montiert, dass sie das stangenförmige Bauteil 2 der Reling 104 gegen Lösen vom Verbindungsteil 3 (nicht sichtbar, da vom Arretierteil 1 verdeckt) der Reling 104 sichert. Bei einer Reling 104 wird normalerweise kein Drehmoment vom stangenförmigen Bauteil 2 übertragen, im Speziellen ist jedoch vorgesehen, dass über eine Reling 104 die Neigung der Frontblende erfolgen kann und somit wiederum die Reling 104 ein Drehmoment überträgt, da die Neigungseinstellung im Speziellen durch ein Verdrehen der Reling 104 erfolgt, wodurch die Reling 104 zu einer drehmomentübertragenden Welle 10 wird.

Figur 10a zeigt eine perspektivische Ansicht des stangenförmigen Bauteiles 2, welcher auch in diesem Ausführungsbeispiel als Synchronisationsstange 20 ausgebildet ist.

In diesem bevorzugten Ausführungsbeispiel ist der Arretierteil 1 nicht als gesonderter Bauteil ausgebildet, sondern ist direkt am stangenförmigen Bauteil 2 ausgebildet, bevorzugterweise sind der Arretierteil 1 und der stangenförmige Bauteil 2 zusammen einstückig ausgebildet.

Wie in Figur 10b gut ersichtlich ist, ist dabei der Arretierteil 1 federnd am stangenförmigen Bauteil 2 ausgebildet. Dabei weist der Arretierteil 1 einen radial federnden Rastteil 40 - welcher in diesem bevorzugten Ausführungsbeispiel als eine radial federnde Rastnase 41 ausgebildet ist - auf. Diese radial federnde Rastnase 41 ragt in die Aufnahme 42 des stangenförmigen Bauteils 2, in die der hier nicht dargestellte Verbindungsteil 3 eindringt und es zu einer kraftschlüssigen Verbindung kommt.

Durch einfaches Aufschieben des Verbindungsteiles 3 wird die radial federnde Rastnase 41 nach außen gedrückt und der Verbindungsteil 3 kann in die Aufnahme 42 einfahren. Sobald sich der Verbindungsteil 3 innerhalb der Aufnahme 42 befindet, schnappt die radial federnde Rastnase 41 wieder nach oben und verhindert durch ihren Vorsprung (also ihre Nase) der in die Aufnahme 42 ragt, dass sich der Verbindungsteil 3 wieder aus der Aufnahme 42 des stangenförmigen Bauteils 2 herausbewegen kann. Sollte ein erneutes Lösen gewünscht sein, so kann durch ein Hinausdrücken der Rastnase 41 und gleichzeitigem Herausziehen des Verbindungsteiles 3 dieser wieder vom stangenförmigen Bauteil 2 gelöst werden.

Ein großer Vorteil dieses radial federnden Rastteils 40 liegt darin, dass er werkzeuglos betätigbar ist, d.h. dass ein einfaches Aufschieben des Verbindungsteiles 3 in die Aufnahme 42 mit anschließender automatischer Verriegelung erfolgen kann.

Selbst nachdem der Verbindungsteil 3 sich in der Aufnahme 42 des stangenförmigen Bauteiles 2 befindet und die radial federnde Rastnase 41 ein Austreten des Verbindungsteiles 3 verhindert, kann der Verbindungsteil 3 immer noch in axialer Längsrichtung gegenüber dem stangenförmigen Bauteil 2 verschoben werden, da der Arretierteil 1 nur das Loslösen des Verbindungsteils 3 vom stangenförmigen Bauteil 2 verhindert, jedoch nicht diesen Verbindungsteil 3 mit dem stangenförmigen Bauteil 2 verklemmt.

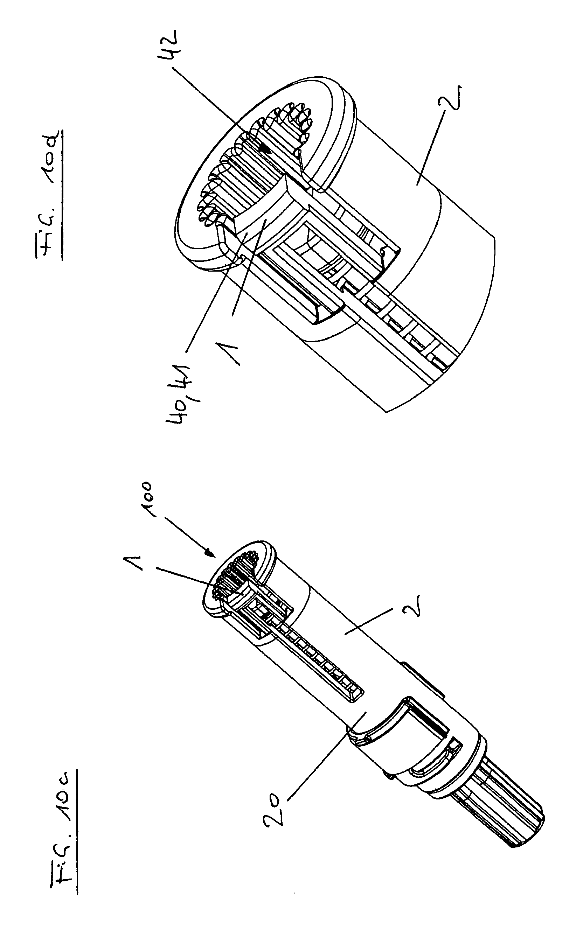

Figur 10c zeigt eine weitere perspektivische Ansicht des stangenförmigen Bauteils, wie eben in den Figuren 10a und 10b beschrieben.

In dieser Darstellung ist gut erkennbar, dass der Arretierteil 1 einstückig zusammen mit dem stangenförmigen Bauteil 2 ausgebildet ist.

Ansonsten gilt für Figur 10c und Figur 10d das bei den Figuren 10a und 10b erwähnte.

In diesem Ausführungsbeispiel ist der Arretierteil 1 am stangenförmigen Bauteil 2 ausgebildet. Für den Fachmann versteht es sich von selbst, dass es ebenso sein könnte, dass der Arretierteil 1 am Verbindungsteil 3 ausgebildet ist und von diesem aus den stangenförmigen Bauteil 2 arretiert.

## Patentansprüche

1. Bewegbar gelagertes Möbelteil (110) mit:
- einer drehmomentübertragenden Welle (10), insbesondere Synchronisationsstange (20), wobei die Welle (20) mindestens zwei Teilwellen aufweist, wobei eine Teilwelle als ein stangenförmiges Bauteil (2) ausgebildet ist und die zweite Teilwelle als ein Verbindungsteil (3) ausgebildet ist, und
- einer Verbindungseinrichtung (100) für das stangenförmige Bauteil (2) mit dem Verbindungsteil (3) - insbesondere mit wenigstens einer Feder (4), die das stangenförmige Bauteil (2) mit dem Verbindungsteil (3) federnd zusammenhält -
**dadurch gekennzeichnet, dass** ein Arretierteil (1) vorgesehen ist, der am stangenförmigen Bauteil (2) und/oder am Verbindungsteil (3) ausgebildet und/oder montierbar ist und dass der Arretierteil (1) das stangenförmige Bauteil (2) und das Verbindungsteil (3) gegen Lösen sichert.

2. Möbelteil nach Anspruch 1, **dadurch gekennzeichnet, dass** der Verbindungsteil (3) als Zapfen (30) ausgebildet ist, der (30) in eine Aufnahme (42) des stangenförmigen Bauteils (2) eindringt.

3. Möbelteil nach Anspruch 1, **dadurch gekennzeichnet, dass** der Verbindungsteil (3) als Aufnahme ausgebildet ist, in die das stangenförmige Bauteil (2) eindringt.

4. Möbelteil nach einem der Ansprüche 1 bis 3, **dadurch gekennzeichnet, dass** das stangenförmige Bauteil (2) eine Synchronisationsstange (20) für eine Schublade (101) ist, wobei die Synchronisationsstange (20) links und rechts ein Zahnrad (21) oder eine Rolle antreibt die eine Ausfahrbewegung einer linken (111) und rechten Ausziehschiene (112) synchronisiert.

5. Möbelteil nach einem der Ansprüche 1 bis 3, **dadurch gekennzeichnet, dass** das stangenförmige Bauteil (2) eine Synchronisationsstange (20) für eine Möbelklappe (102) ist, die eine Schwenkbewegung eines linken (121) und eines rechten Stellarmes (122) zum Antrieb der Möbelklappe (102) synchronisiert.

6. Möbelteil nach einem der Ansprüche 1 bis 5, **dadurch gekennzeichnet, dass** der Arretierteil (1) clipartig ausgebildet ist.

7. Möbelteil nach einem der Ansprüche 1 bis 6, **dadurch gekennzeichnet, dass** der Arretierteil (1) radial sprengringartig auf den Verbindungsteil (3) und/oder den stangenförmigen Bauteil (2) aufschiebbar ausgebildet ist.

8. Möbelteil nach einem der Ansprüche 1 bis 7, **dadurch gekennzeichnet, dass** der Verbindungsteil (3) und das stangenförmige Bauteil (2) zum Übertragen eines Drehmoments im Querschnitt eine von der Kreisform abweichende Kontur aufweisen.

9. Möbelteil nach einem der Ansprüche 1 bis 8, **dadurch gekennzeichnet, dass** der Arretierteil (1) einstückig mit dem stangenförmigen Bauteil (2) oder einstückig mit dem Verbindungsteil (3) ausgebildet ist.

10. Möbelteil nach einem der Ansprüche 1 bis 9, **dadurch gekennzeichnet, dass** der Arretierteil (1) federnd am stangenförmigen Bauteil (2) oder am Verbindungsteil (3) ausgebildet ist.

11. Möbelteil nach einem der Ansprüche 1 bis 10, **dadurch gekennzeichnet, dass** der Arretierteil (1) einen radial federnden Rastteil (40) - vorzugsweise eine radial federnde Rastnase (41) - aufweist, der (40) in die Aufnahme (42) des stangenförmigen Bauteils (2) oder des Verbindungsteiles (3) ragt.

12. Möbelteil nach einem der Ansprüche 1 bis 11, **dadurch gekennzeichnet, dass** der Arretierteil (1) nach erfolgter Montage am Verbindungsteil (3) und/oder am stangenförmigen Bauteil (2) in axialer Längsrichtung gegenüber dem Verbindungsteil (3) und/oder dem stangenförmigen Bauteil (2) verschiebbar ist oder dass der am Verbindungsteil (3) oder am stangenförmigen Bauteil (2) ausgebildete Arretierteil (1) in axialer Längsrichtung gegenüber dem Verbindungsteil (3) und/oder dem stangenförmigen Bauteil (2) verschiebbar ist.

13. Möbelteil nach einem der Ansprüche 1 bis 12, **dadurch gekennzeichnet, dass** die Verbindungseinrichtung (100) ein stangenförmiges Bauteil (2) und zwei Verbindungsteile (3, 30) aufweist, wobei das im Wesentlichen stangenförmige Bauteil (2) zwischen den beiden Verbindungsteilen (3, 30) durch zwei Arretierteile (1) gegen Lösen sicherbar ist.

14. Möbel (120) mit mindestens einem bewegbaren Möbelteil (110) nach einem der Ansprüche 1 bis 13.

15. Verbindungseinrichtung (100) für ein im Wesentlichen stangenförmiges Bauteil (2) mit einem Verbindungsteil (3) - insbesondere mit wenigstens einer Feder (4), die das stangenförmige Bauteil (2) mit dem Verbindungsteil (3) federnd zusammenhält - insbesondere für ein bewegbar gelagertes Möbelteil (110) nach einem der Ansprüche 1 bis 13, **dadurch gekennzeichnet, dass** ein Arretierteil (1) vorgesehen ist, der am stangenförmigen Bauteil (2) und am Verbindungsteil (3) montierbar ist und das stangenförmige Bauteil (2) und das Verbindungsteil (3) gegen Lösen sichert.

## Claims

1. A movably mounted furniture part (110) comprising:
- a torque-transmitting shaft (10), in particular a synchronization rod (20), wherein the shaft (20) has at least two shaft portions, wherein one shaft portion is in the form of a rod-shaped component (2) and the second shaft portion is in the form of a connecting portion (3), and
- a connecting device (100) for connecting the rod-shaped component (2) to the connecting portion (3) - in particular with at least one spring (4) which resiliently holds the rod-shaped component (2) together with the connecting portion (3),
**characterized in that** there is provided an arresting portion (1) which is provided on and/or can be mounted on the rod-shaped component (2) and/or on the connecting portion (3) and the arresting portion (1) secures the rod-shaped component (2) and the connecting portion (3) against release.

2. A furniture part as set forth in claim 1 **characterized in that** the connecting portion (3) is in the form of a pin (30) which penetrates into a receiving means (42) in the rod-shaped component (2).

3. A furniture part as set forth in claim 1 **characterized in that** the connecting portion (3) is in the form of a receiving means into which the rod-shaped component (2) penetrates.

4. A furniture part as set forth in one of claims 1 through 3 **characterized in that** the rod-shaped component (2) is a synchronization rod (20) for a drawer (101), wherein the synchronization rod (20) at left and right drives a gear (21) or a roller which synchronizes an extension movement of a left (111) and right extension rail (112).

5. A furniture part as set forth in one of claims 1 through 3 **characterized in that** the rod-shaped component (2) is a synchronization rod (20) for a furniture flap (102), which synchronizes a pivotal movement of a left (121) and a right control arm (122) for driving the furniture flap (102).

6. A furniture part as set forth in claims 1 through 5 **characterized in that** the arresting portion (1) is of a clip-like configuration.

7. A furniture part as set forth in one of claims 1 through 6 **characterized in that** the arresting portion (1) is adapted to be pushed radially in circlip-like fashion on to the connecting portion (3) and/or the rod-shaped component (2).

8. A furniture part as set forth in one of claims 1 through 7 **characterized in that** the connecting portion (3) and the rod-shaped component (2) are of a contour differing from a circular shape in cross-section for the transmission of a torque.

9. A furniture part as set forth in one of claims 1 through 8 **characterized in that** the arresting portion (1) is provided in one piece with the rod-shaped component (2) or in one piece with the connecting portion (3).

10. A furniture part as set forth in one of claims 1 through 9 **characterized in that** the arresting portion (1) is provided resiliently on the rod-shaped component (2) or on the connecting portion (3).

11. A furniture part as set forth in one of claims 1 through 10 **characterized in that** the arresting portion (1) has a radially resilient latching portion (40) - preferably a radially resilient latching nose (41) - which (40) projects into the receiving means (42) of the rod-shaped component (2) or the connecting portion (3).

12. A furniture part as set forth in one of claims 1 through 11 **characterized in that** after mounting has been effected to the connecting portion (3) and/or to the rod-shaped component (2) the arresting portion (1) is displaceable in the axial longitudinal direction relative to the connecting portion (3) and/or the rod-shaped component (2) or the arresting portion (1) provided on the connecting portion (3) or the rod-shaped component (2) is displaceable in the axial longitudinal direction relative to the connecting portion (3) and/or the rod-shaped component (2).

13. A furniture part as set forth in one of claims 1 through 12 **characterized in that** the connecting device (100) has a rod-shaped component (2) and two connecting portions (3, 30), wherein the substantially rod-shaped component (2) can be secured against release between the two connecting portions (3, 30) by two arresting portions (1).

14. An article of furniture (120) comprising at least one movable furniture part (110) as set forth in one of claims 1 through 13.

15. A connecting device (100) for connecting a substantially rod-shaped component (2) to a connecting portion (3) - in particular with at least one spring (4) which resiliently holds the rod-shaped component (2) together with the connecting portion (3) - in particular for a movably mounted furniture part (110) as set forth in one of claims 1 through 13, **characterized in that** there is provided an arresting portion (1) which can be mounted on the rod-shaped component (2) and the connecting portion (3) and secures the rod-shaped component (2) and the connecting portion (3) against release.

## Revendications

1. Elément de meuble logé de manière mobile (110) avec :
- un arbre (10) transmettant un couple, en particulier une tige de synchronisation (20), l'arbre (20) présentant au moins deux arbres partiels, un arbre partiel étant réalisé comme un composant en forme de tige (2) et le second arbre partiel étant réalisé comme une partie de liaison (3), et
- un dispositif de liaison (100) pour le composant en forme de tige (2) avec la partie de liaison (3), en particulier avec au moins un ressort (4) qui maintient ensemble de manière élastique le composant en forme de tige (2) avec la partie de liaison (3),
**caractérisé en ce qu'**une partie d'arrêt (1) est prévue, laquelle est réalisée et/ou peut être montée sur le composant en forme de tige (2) et/ou sur la partie de liaison (3) et **en ce que** la partie d'arrêt (1) bloque le composant en forme de tige (2) et la partie de liaison (3) contre un détachement.

2. Elément de meuble selon la revendication 1, **caractérisé en ce que** la partie de liaison (3) est réalisée comme un tenon (30) qui pénètre dans un logement (42) du composant en forme de tige (2).

3. Elément de meuble selon la revendication 1, **caractérisé en ce que** la partie de liaison (3) est réalisée comme un logement, dans lequel le composant en forme de tige (2) pénètre.

4. Elément de meuble selon l'une quelconque des revendications 1 à 3, **caractérisé en ce que** le composant en forme de tige (2) est une tige de synchronisation (20) pour un tiroir (101), la tige de synchronisation (20) entraînant à gauche et à droite une roue dentée (21) ou un rouleau qui synchronise un mouvement de sortie d'un rail d'extraction gauche (111) et d'un rail d'extraction droit (112).

5. Elément de meuble selon l'une quelconque des revendications 1 à 3, **caractérisé en ce que** le composant en forme de tige (2) est une tige de synchronisation (20) pour un clapet de meuble (102) qui synchronise un mouvement de pivotement d'un bras de réglage gauche (121) et d'un bras de réglage droit (122) pour l'entraînement du clapet de meuble (102).

6. Elément de meuble selon l'une quelconque des revendications 1 à 5, **caractérisé en ce que** la partie d'arrêt (1) est réalisée en forme d'agrafe.

7. Elément de meuble selon l'une quelconque des revendications 1 à 6, **caractérisé en ce que** la partie d'arrêt (1) est réalisée de manière à pouvoir être poussée radialement comme une bague élastique sur la partie de liaison (3) et/ou le composant en forme de tige (2).

8. Elément de meuble selon l'une quelconque des revendications 1 à 7, **caractérisé en ce que** la partie de liaison (3) et le composant en forme de tige (2) présentent pour la transmission d'un couple de rotation une section transversale dont le contour diffère d'une forme de cercle.

9. Elément de meuble selon l'une quelconque des revendications 1 à 8, **caractérisé en ce que** la partie d'arrêt (1) est réalisée d'un seul tenant avec le composant en forme de tige (2) ou d'un seul tenant avec la partie de liaison (3).

10. Elément de meuble selon l'une quelconque des revendications 1 à 9, **caractérisé en ce que** la partie d'arrêt (1) est réalisée de manière élastique sur le composant en forme de tige (2) ou sur la partie de liaison (3).

11. Elément de meuble selon l'une quelconque des revendications 1 à 10, **caractérisé en ce que** la partie d'arrêt (1) présente une partie d'encliquetage (40) élastique radial, de préférence un nez d'encliquetage (41) élastique radial, qui se dresse dans le logement (42) du composant en forme de tige (2) ou de la partie de liaison (3).

12. Elément de meuble selon l'une quelconque des revendications 1 à 11, **caractérisé en ce que** la partie d'arrêt (1) est mobile après le montage sur la partie de liaison (3) et/ou sur le composant en forme de tige (2) dans le sens longitudinal axial par rapport à la partie de liaison (3) et/ou au composant en forme de tige (2) ou **en ce que** la partie d'arrêt (1) réalisée sur la partie de liaison (3) ou sur le composant en forme de tige (2) est mobile dans le sens longitudinal axial par rapport à la partie de liaison (3) et/ou au composant en forme de tige (2).

13. Elément de meuble selon l'une quelconque des revendications 1 à 12, **caractérisé en ce que** le dispositif de liaison (100) présente un composant en forme de tige (2) et deux parties de liaison (3, 30), le composant sensiblement en forme de tige (2) pouvant être bloqué entre les deux parties de liaison (3, 30) par deux parties d'arrêt (1) contre le détachement.

14. Meuble (120) avec au moins un élément de meuble (110) mobile selon l'une quelconque des revendications 1 à 13.

15. Dispositif de liaison (100) pour un composant sensiblement en forme de tige (2) avec une partie de liaison (3), en particulier avec au moins un ressort (4) qui maintient ensemble sur ressort le composant en forme de tige (2) avec la partie de liaison (3), en particulier pour un élément de meuble (110) logé de manière mobile selon l'une quelconque des revendications 1 à 13, **caractérisé en ce qu'**une partie d'arrêt (1) est prévue, laquelle peut être montée sur le composant en forme de tige (2) et sur la partie de liaison (3) et bloque le composant en forme de tige (2) et la partie de liaison (3) contre un détachement.
